# EUROPEAN PATENT APPLICATION

(11) **EP 2 073 125 A1**
(43) Date of publication of application: **24.06.2009**
(21) Application number: 08162714.3
(22) Date of filing: 20.08.2008
(51) Int. Cl.: G06F 12/02, G06K 19/07, G07F 7/10

(54) **Apparatus and method for managing user memory of RFID tag**

(30) Priority: 17.12.2007 KR 20070132634
(71) Applicant: Electronics and Telecommunications Research Institute, Yuseong-gu, Daejeon 305-350 (KR)
(72) Inventor: Park, Joo Sang, Daejeon (KR); Lee, Yong Joon, Daejeon (KR); Park, Jong-Hyun, Daejeon (KR)
(74) Representative: Betten & Resch

(57) **Abstract**

The present invention relates to a device and method for managing a memory of an RFID tag. The present invention provides an apparatus for managing a user memory of an RFID tag. The apparatus includes a memory usage information storing unit, a memory registration-management unit, and a memory referring unit. The memory usage information storing unit stores memory usage information. The memory registration-management unit searches information regarding an empty region of the user memory by the memory usage information storing unit, provides the searched information to the specific application system, receives memory usage information regarding the specific data that is to be stored in the user memory from the specific application system, and stores and manages the memory usage information regarding the specific data in the memory usage information storing unit, if the specific application system requests the user memory to store specific data. The memory referring unit provides memory usage information regarding the specific data, which is stored in the memory usage information storing unit, to the application system that requests to refer to the specific data if referring to the specific data is requested. According to the present invention, it is possible to systematically and efficiently manage data that is stored in the user memory region of the RFID tag by a plurality of users, and to prevent the storage positions of a plurality of data that are stored in the user memory region of the RFID tag from overlapping. As a result, it is possible to prevent a loss of data to be stored in the user memory region of the RFID tag.

## Description

### BACKGROUND OF THE INVENTION

### (a) Field of the Invention

The present invention relates to an apparatus and method of managing a user memory of an RFID tag.

The present invention is supported by the IT R&D program of MIC/IITA [Project management No.: 2007-S-024-01, Development of SSI Platform for Improving an RFID Service].

### (b) Description of the Related Art

A general RFID tag includes a memory, an inlay that is composed of a chip and an antenna, and a housing that is used as a package or a case. The tag transmits/receives a radio wave to/from a reader through an antenna of the reader in order to perform communication. During the communication, the reader reads or writes data of the tag.

The RFID tag generally includes a code, which is provided in a memory built into the RFID tag and is used for identifying an object. Therefore, the RFID tag has been developed so as to be used for identifying a corresponding object while being attached to the object.

The memory provided in the RFID tag further stores data according to the purpose and function of the tag in addition to an identification code, and the data of the tag memory may be classified as an identifier, tag manufacturer, hardware type, security, storage format, size, a spare region, setting information, a password, a user region, and the like.

The size, format, meaning, and the like of most of data stored in the tag memory are predetermined according to the type and purpose of a tag. Reading and writing methods are also defined, and are previously shared among users. Therefore, there is no problem in reading, writing, and exchanging desired data from the tag. Typically, an ISO/IEC 18000-x standard, which is an international standard, defines the configuration of the tag memory and a data access method. In fact, an air interface standard of EPCglobal and a tag data standard, which are standards, correspond to this.

Further, empty spaces, which can be arbitrarily used by a user or an application system, exist in an RFID tag memory. A memory space that can be arbitrary used as described above is called a user memory.

A specific policy and a method for actually utilizing this region are not determined. Therefore, currently, for a method of reading the entire user memory and searching for desired data, a method of sequentially reading a user memory by a predetermined unit and searching for desired data from the read unit memory, a method of previously defining a template of a user memory and using the user memory according to the template, and the like, are required.

However, a user memory is used in many types of tags, such as a passive tag, an active tag, and a sensor tag. Further, since any data of data necessary for users is an object to be stored and exchanged in the user memory region, the utility value thereof is very high. However, there is a problem in that the above-mentioned present methods of using a user memory cannot provide a method of systematically and efficiency using and managing a memory. Further, while a plurality of users read and write data on the RFID tag, the above-mentioned methods may have problems such as overlapping, loss, and errors of data, and loss may occur in using a memory.

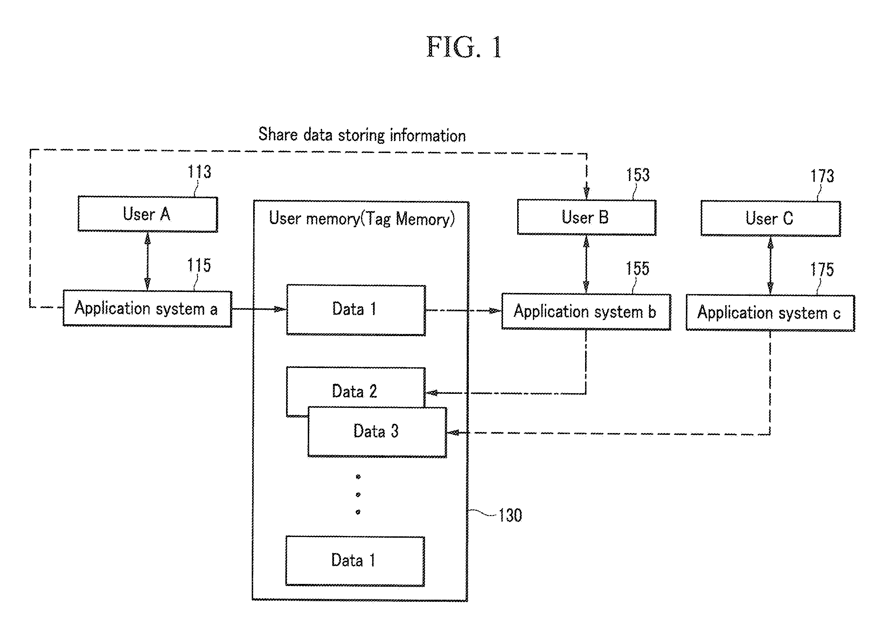

FIG. 1 is a view illustrating a method of managing a memory in an RFID tag in the related art.

Referring to FIG. 1, a user A 113 writes Data 1 on a user memory of an RFID tag 130 through an application system a 115. Then, the user A 113 should exchange information regarding the storage of Data 1 with a user B 153 in order to share Data 1 with the user B 153. Accordingly, the user B 153 can access the Data 1 in a user memory region of the tag through an application system b 155 by using this information.

However, if a user C 173 writes Data 3 in the user memory 130 through a application system c 175 when the user B 153 does not provide the information regarding the storage of Data 2 to another user C after writing Data 2 on the user memory of the RFID tag, the user C 173 does not known that the data having been input by the user B exists. For this reason, the storage region of Data 2 and the storage region of Data 3 may overlap each other, and data loss may thus occur.

Accordingly, when a plurality of users store data in the RFID tag, the storage regions of data may overlap each other and data loss may thus occur. Therefore, there is a demand for a method of systematically and efficiently managing a memory while a plurality of users read, write, and exchange data in the user memory region of the RFID tag.

### SUMMARY OF THE INVENTION

The present invention has been made in an effort to provide a device and method of systematically and efficiency managing data that is stored in a user memory region of an RFID tag by a plurality of users.

An exemplary embodiment of the present invention provides an apparatus for managing a user memory of an RFID tag. The apparatus includes a memory usage information storing unit, a memory registration-management unit, and a memory referring unit. The memory usage information storing unit stores memory usage information, and the memory usage information includes information regarding data stored in the user memory and information regarding a region of the user memory storing the data. The memory registration-management unit searches information regarding an empty region of the user memory by the memory usage information storing unit, provides the searched information to the specific application system, receives memory usage information regarding the specific data that is to be stored in the user memory from the specific application system, and stores and manages the memory usage information regarding the specific data in the memory usage information storing unit, if the specific application system requests the user memory to store specific data. The memory referring unit provides memory usage information regarding the specific data, which is stored in the memory usage information storing unit, to the application system that requests to refer to the specific data if referring to the specific data is requested.

Another embodiment of the present invention provides a method of managing a user memory of an RFID tag. The method includes receiving a request for storing specific data from a specific application system to the user memory, providing information regarding an empty region of the user memory if the empty region of the user memory is larger than the size of the specific data, and receiving and managing memory usage information regarding the specific data that is stored in an empty region of the user memory from the outside.

Yet another embodiment of the present invention provides a method of managing a user memory of an RFID tag. The method includes receiving a request for referring to specific data stored in the user memory from a specific application system, searching memory usage information that includes information regarding the specific data stored in the user memory and information regarding a region of the user memory storing the data, and providing memory usage information regarding the specific data in the user memory.

### BRIEF DESCRIPTION OF THE DRAWINGS

FIG. 1 is a view illustrating a method of managing a memory in an RFID tag in the related art.
FIG. 2 is a view illustrating a method of managing a memory in a device for managing a memory in an RFID tag according to an exemplary embodiment of the present invention.
FIG. 3 is a flowchart illustrating the operation of a memory registration-management unit according to an exemplary embodiment of the present invention.
FIG. 4 is a flowchart illustrating the operation of a memory referring unit according to an exemplary embodiment of the present invention.
FIG. 5 is a flowchart illustrating a memory reallocation process using a continuous allocation method in a memory reallocation-management unit according to an exemplary embodiment of the present invention.
FIG. 6 is a flowchart illustrating a memory reallocation process using a noncontiguous allocation method in a memory reallocation-management unit according to an exemplary embodiment of the present invention.

### DETAILED DESCRIPTION OF THE EMBODIMENTS

In the following detailed description, only certain exemplary embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. Like reference numerals designate like elements throughout the specification.

Further, it will be further understood that the terms "comprise" and/or "comprising" specify the presence of stated features, integers, steps, operations, elements, and/or components, but do not preclude the presence or addition of one or more other features, integers, steps, operations, elements, components, and/or groups thereof.

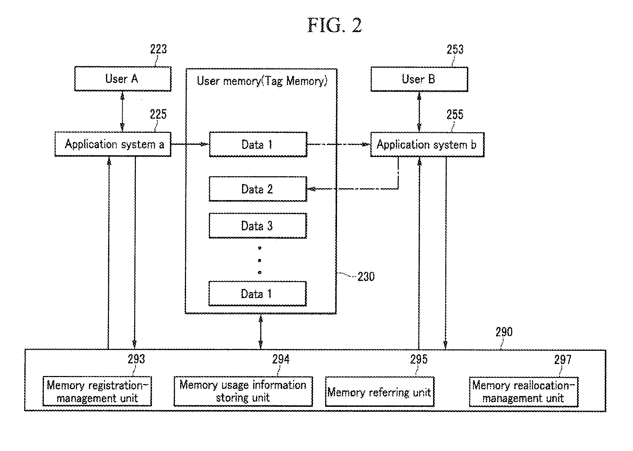

FIG. 2 is a view illustrating a method of managing a memory in a device for managing a memory in an RFID tag according to an exemplary embodiment of the present invention. For convenience of description, a user memory region of an RFID tag will be mainly described in an exemplary embodiment of the present invention. However, the present invention is not necessarily limited thereto, and may be applied to an arbitrary use region existing in an RFID tag.

In this case, an application system according to an exemplary embodiment of the present invention is an apparatus that can write, change, and delete data in a user memory region of a radio frequency identification (RFID) tag.

Referring to FIG. 2, a device 290 for managing a user memory of an RFID tag includes a memory registration-management unit 293, a memory usage information storing unit 294, a memory referring unit 295, and a memory reallocation-management unit 297.

If a user writes specific data on a user memory region or an arbitrary use region of an RFID tag, the memory registration-management unit 293 registers and manages information regarding the specific data and information regarding the user memory region of the RFID tag storing the specific data so that another user can read the specific data from the user memory region of the RFID tag storing the specific data. In this case, the memory registration-management unit 293 stores the information regarding the specific data and the information regarding the user memory region of the RFID tag storing the specific data, in the memory usage information storing unit 294, and manages the information. In this case, the memory usage information storing unit 294 has been separated from the memory registration-management unit 293 in the exemplary embodiment of the present invention. However, the present invention is not necessarily limited thereto, and the memory usage information storing unit 294 may be included in the memory registration-management unit 293.

Further, when a memory reallocation process for improving the storage efficiency of the memory is performed, the memory registration-management unit 293 registers and manages information regarding specific data that is changed according to a memory reallocation result, and information regarding the user memory region of the RFID tag storing the specific data. In this case, even when the data is changed or deleted, the memory registration-management unit 293 stores the information regarding the specific data and the information regarding the user memory region of the RFID tag storing the specific data.

The memory registration-management unit 293 is involved when a user intends to write the specific data on the user memory. When a user allowed to write data on the corresponding tag writes data on the user memory of the RFID tag, the memory registration-management unit performs functions of registering, managing, and providing the information regarding the specific data and the information regarding the memory region of the RFID tag storing the specific data so that the user has access to the corresponding data or safely writes other data excluding the corresponding data on the memory of the tag.

In order to perform the functions of registering, managing, and providing the information, memory usage information, which includes the information regarding the specific data to be processed by the memory registration-management unit 293 and the information regarding the memory region of the RFID tag storing the specific data, includes information regarding other related data, such as an identifier used to identify a tag, a user identifier, a data identifier, initial and end addresses of data in the tag memory, data authority, and operation date and time. It is possible to provide a systematic and efficient method of identifying a tag, data in the tag, and a recorder of the data, and having access to the data with regard to a plurality of data written on the user memory regions among a plurality of users, on the basis of the information.

The operation of the memory registration-management unit 293 will be described in detail below with reference to drawings.

The memory usage information storing unit 294 stores the information regarding the specific data stored in the user memory region of the RFID tag and the information regarding the user memory region of the RFID tag storing the specific data.

When the specific data is written in the user memory region of the tag, the memory referring unit 295 provides functions of reading or writing specific data to another user. That is, if the user or another user requests the reading of the specific data written in the user memory region of the tag, the memory referring unit 295 searches the memory usage information storing unit 294 for the information regarding the specific data and the information regarding the user memory region of the RFID tag storing the specific data, and provides the information to the user or another user so that the user or another user can read the corresponding data from the user memory region of the tag.

When a user or an application system intends to have access to data that has already been written in the user memory by another user or another application system, if information regarding the data to which the user or the application system intends to have access is requested, the memory referring unit 295 searches for the tag storing the corresponding data and provides information so that the user or the application system can read the data.

The operation of the memory referring unit 295 will be described in detail below with reference to drawings.

The memory reallocation-management unit 297 optimizes the user memory region of the tag by using a predetermined reallocation method. That is, as shown in FIG. 2, when a plurality of users write or delete a plurality of data having different sizes in/from the user memory of the RFID tag, a part of a user memory region is empty among the plurality of data remaining in the memory. Therefore, the memory reallocation-management unit 297 rearranges the data of the user memory region and reallocates the user memory region, thereby improving the efficiency of the memory. In this case, the information regarding the specific data that is initially written on the user memory and the information regarding the user memory region of the RFID tag storing the specific data are also changed.

If a plurality of data exist in the user memory, empty memory spaces are generated in processes for writing, changing, and deleting data. If empty memory spaces and data exist together, empty and unused spaces are generated. For this reason, there is a problem in that a delay is generated during the access to the data. The memory reallocation-management unit 297 reallocates the memory to a plurality of data in order to solve this problem. Therefore, the memory reallocation-management unit minimizes empty spaces among the data and improves efficiency, that is, suppresses the delay of the access to the data. That is, the memory reallocation-management unit 297 rearranges the data stored in the user memory, and thus reallocates the memory.

The operation of the memory reallocation-management unit 297 will be described in detail below with reference to drawings.

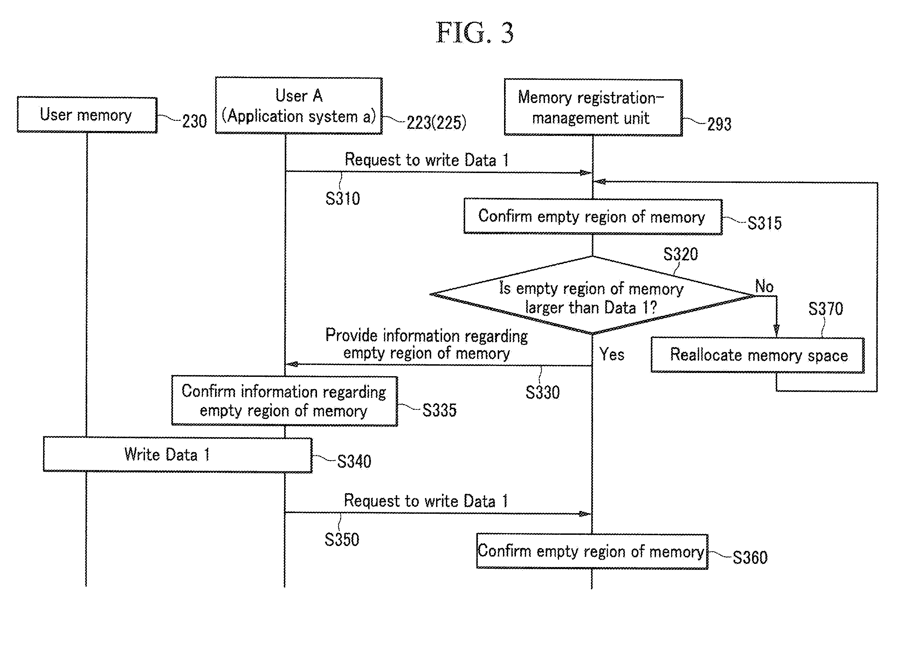

FIG. 3 is a flowchart illustrating the operation of the memory registration-management unit according to an exemplary embodiment of the present invention. In this case, for convenience of description, it is assumed that a user A 223 stores Data 1 in a user memory through an application system a 225.

Referring to FIGS. 2 and 3, when the user A 223 attempts to write Data 1 in a user memory 230 through the application system a 225, the application system a 225 requests the memory registration-management unit 293 of the device 290 for managing a user memory to write Data 1 (S310). The memory registration-management unit 293 confirms an empty region of the user memory 230 through the memory usage information storing unit 294 (S315), and compares the empty region of the user memory 230 with the size of Data 1 to determine whether the empty region of the user memory 230 is larger than the size of Data 1 (S320). In this case, the application system a 225 also transmits information regarding Data 1.

If it is determined in step S320 that the empty region of the user memory 230 is larger than the size of Data 1, the memory registration-management unit 293 provides information regarding the empty region of the user memory 230 to the application system a 225 (S330).

Then, the application system a 225 confirms the information regarding the empty region of the user memory 230 (S335), writes Data 1 in the empty region of the user memory 230 (S340), and transmits the information regarding Data 1 and the information regarding the used space of the user memory, which is used to write Data 1, to the memory registration-management unit 293 (S293).

Subsequently, the memory registration-management unit 293 generates and stores memory usage information, which includes the information regarding Data 1 received from the application system a 225 and the information regarding the used space of the user memory that is used to write Data 1 (S360).

If it is determined in step S320 that the empty region of the user memory 230 is not larger than the size of Data 1, the memory registration-management unit 293 performs reallocation of a user memory space by the memory reallocation-management unit 297. The reallocation of the user memory space performed by the memory reallocation-management unit 297 will be described in detail below with reference to drawings.

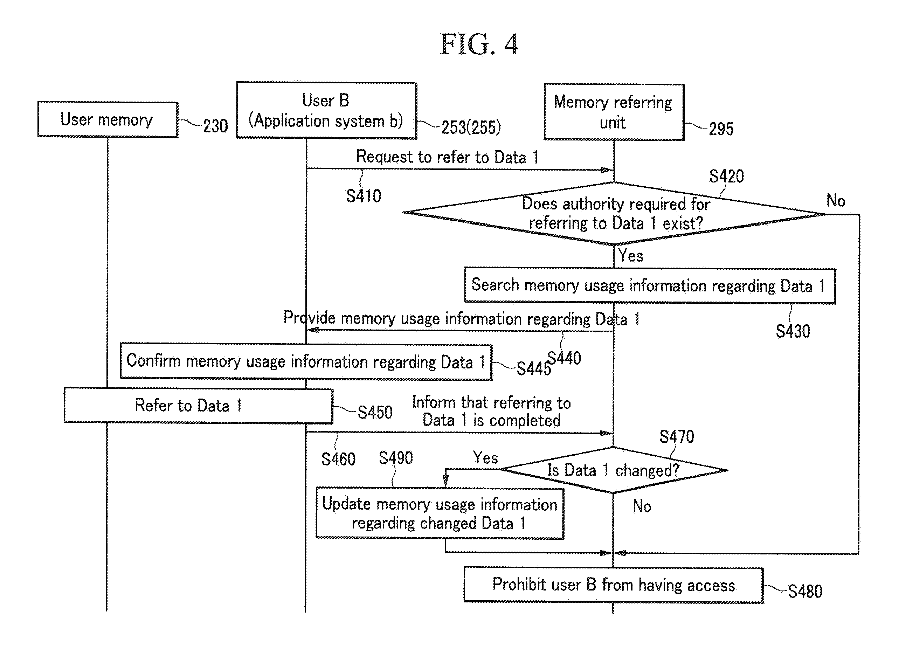

FIG. 4 is a flowchart illustrating the operation of a memory referring unit according to an exemplary embodiment of the present invention. In this case, for convenience of description, it is assumed that a user B 253 refers to Data 1 in the user memory 230 through the memory referring unit 295.

Referring to FIGS. 2 and 4, when a user B 253 attempts to refer to Data 1 that is stored in the user memory 230 through an application system b 255, the application system b 255 requests the memory referring unit 295 of the device 290 for managing a user memory to refer to Data 1 (S410) and determines whether the user B 253 has authority required for referring to Data 1 (S420).

If it is determined in step S420 that the user B 253 has authority required for referring to Data 1, the memory usage information regarding Data 1 is searched (S430) and provided to the application system b 255 of the user B 253 (S440).

Then, the application system b 255 confirms the provided memory usage information regarding Data 1 (S445), and refers to Data 1 from the user memory 230 (S450).

Subsequently, the application system b 255 informs the memory referring unit 295 that the referring to Data 1 is completed (S460), and the memory referring unit 295 determines whether Data 1 stored in the user memory 230 is changed or not (S470).

If it is determined in step S470 that Data 1 stored in the user memory 230 by the application system b 255 is changed, the memory referring unit 295 reflects the change of Data 1 to update the memory usage information (S490), and prohibits the application system b 255 from having access to Data 1 (S480).

If it is determined in step S420 that the user B 253 does not have authority required for referring to Data 1 or if it is determined in step S470 that Data 1 stored in the user memory 230 by the application system b 255 is not changed, step S480 is performed.

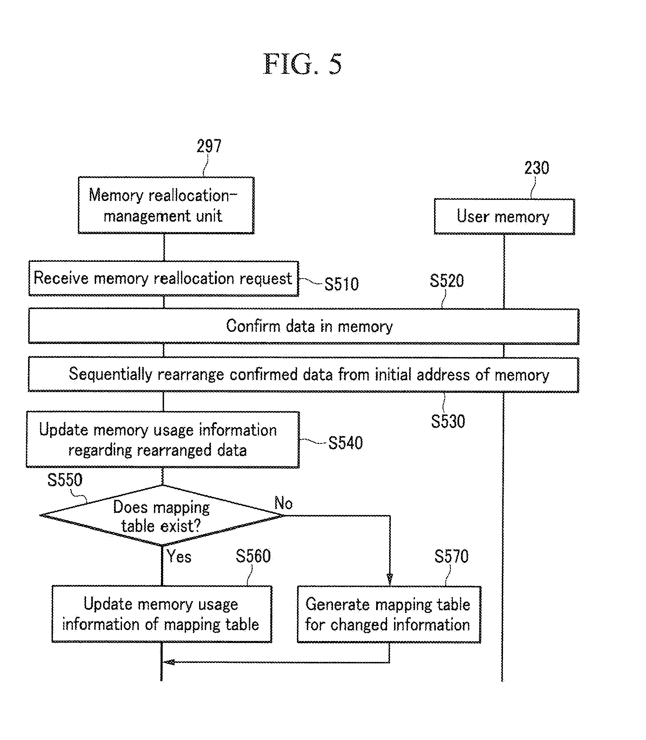

FIG. 5 is a flowchart illustrating a memory reallocation process using a continuous allocation method in the memory reallocation-management unit according to an exemplary embodiment of the present invention.

Referring to FIGS. 2 and 5, when a memory space reallocation request is received from the memory registration-management unit 293 (S510), the memory reallocation-management unit 297 confirms the storage region disposition of the plurality of data stored in the user memory 230 (S520).

Then, the memory reallocation-management unit 297 sequentially rearranges the plurality of data of which storage region disposition is confirmed from the initial address of the user memory, and stores the plurality of data (S530). Further, the memory reallocation-management unit updates the memory usage information regarding the rearranged plurality of data (S540).

Subsequently, the memory reallocation-management unit 297 determines whether a mapping table exists or not (S550).

The mapping table stores, manages, and provides a real address value that is changed for a user to have access to the data stored in the user memory 230 when the memory usage information is requested, and identification values or positional values of the memory units. Alternatively, the mapping table causes the initial input information and the changed data input information of the data input to the user memory 230 to be converted into each other. In this case, the real address value of the data or the information regarding the memory unit should be provided to a user and an application system that intend to have access to the corresponding data, before the access to the data. If the mapping table is used, the user or the application system can only have access to the data to be referred by the initial data input information.

If it is determined in step S550 that the mapping table exists, the memory reallocation-management unit 297 reflects the updated memory usage information to also update the memory usage information of the mapping table (S560).

If it is determined in step S550 that the mapping table does not exist, the memory reallocation-management unit 297 generates mapping tables for the memory usage information and the changed memory usage information when the data is initially registered (S570).

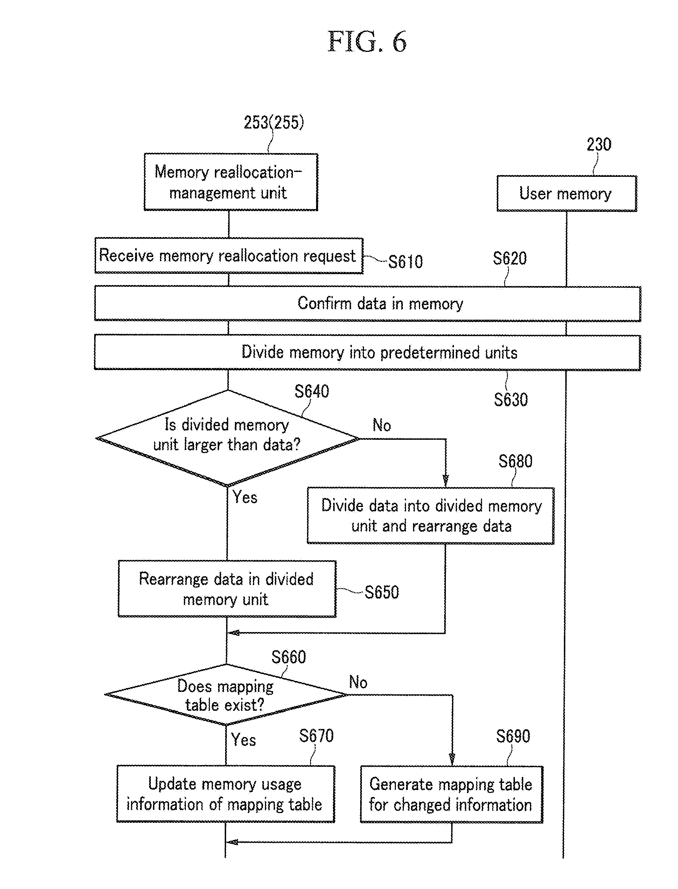

FIG. 6 is a flowchart illustrating a memory reallocation process using a noncontiguous allocation method in a memory reallocation-management unit according to an exemplary embodiment of the present invention. In this case, it is assumed in an exemplary embodiment of the present invention that a user A 223 stores Data 1 in the user memory 230 that stores a plurality of data.

Referring to FIGS. 2 and 6, when a memory space reallocation request is received from the memory registration-management unit 293 (S610), the memory reallocation-management unit 297 confirms the storage region disposition of the plurality of data stored in the user memory 230 (S620).

Then, the memory reallocation-management unit 297 divides the region of the user memory by a predetermined unit (S630), and determines whether the divided memory unit is larger than Data 1 to be stored by the user A 223 (S640).

If it is determined in step S640 that the divided memory (hereinafter, referred to as "a memory unit") is larger than Data 1 to be stored by the user A 223, the plurality of data including Data 1 are rearranged in the divided memory unit (S650).

Subsequently, the memory reallocation-management unit 253 determines whether a mapping table for a user memory storing the plurality of data exists or not (S660). If the mapping table exists, the memory reallocation-management unit reflects the data rearrangement occurring in the user memory to update the memory usage information of the mapping table (S670).

If it is determined in step S640 that the divided memory unit is not larger than Data 1 to be stored by the user A 223, the Data 1 is divided so as to have a size that can be written by the divided memory unit, and is rearranged in the memory unit (S680). Then, step S660 is performed.

If it is determined in step S660 that a mapping table does not exist, the data rearrangement occurring in the user memory is reflected and a mapping table is generated (S690).

According to the present invention, it is possible to systematically and efficiently manage data that is stored in the user memory region of the RFID tag by a plurality of users, and to prevent the storage positions of a plurality of data, which are stored in the user memory region of the RFID tag, from overlapping. As a result, it is possible to prevent a loss of data to be stored in the user memory region of the RFID tag.

Further, since a plurality of data is reallocated to the user memory of the RFID tag so as to optimize the memory allocation for each data, it is possible to improve efficiency and accessibility of the user memory.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. An apparatus for managing a user memory of an RFID tag, the apparatus comprising:
a memory usage information storing unit that stores memory usage information, the memory usage information comprising information regarding data stored in the user memory and information regarding a region of the user memory storing the data;
a memory registration-management unit that searches information regarding an empty region of the user memory by the memory usage information storing unit, provides the searched information to the specific application system, receives memory usage information regarding the specific data that is to be stored in the user memory from the specific application system, and stores and manages the memory usage information regarding the specific data in the memory usage information storing unit, if the specific application system requests the user memory to store specific data; and
a memory referring unit that provides the memory usage information regarding the specific data, which is stored in the memory usage information storing unit, to the application system that requests to refer to the specific data if referring to the specific data is requested.

2. The apparatus of claim 1, wherein the memory registration-management unit stores the memory usage information, which includes at least one kind of information of an identifier used to identify the RFID tag, a user identifier, a data identifier, initial and end addresses of the data stored in the user memory, data authority, and operation date and time, in the memory usage information storing unit, and manages the memory usage information.

3. The apparatus of claim 2, further comprising:
a memory reallocation-management unit that rearranges the data stored in the user memory to optimize the user memory,
wherein, if the size of the specific data requested to be stored in the user memory is larger than the empty region of the user memory, the memory registration-management unit rearranges the data, which have been stored in the user memory, by the memory reallocation-management unit.

4. The apparatus of claim 3, wherein the memory reallocation-management unit rearranges the data in the user memory in a manner such that the data having been stored in the user memory are sequentially rearranged from the initial address of the user memory and stored.

5. The apparatus of claim 3, wherein the memory reallocation-management unit divides the user memory into a predetermined unit, divides the data into a size that corresponds to the divided memories, and rearranges the divided data in the divided memories, respectively.

6. The apparatus of claim 5, wherein
the memory reallocation-management unit generates a mapping table where initial memory usage information, when the data are initially input to the user memory and the data are matched with changed memory usage information that comprises real address values of the data changed during the rearrangement and identification values or positional values of the divided memories, are stored.

7. A method of managing a user memory of an RFID tag, the method comprising:
receiving a request for storing specific data from a specific application system to the user memory;
providing information regarding an empty region of the user memory if the empty region of the user memory is larger than the size of the specific data; and
receiving and managing memory usage information regarding the specific data that is stored in an empty region of the user memory from the outside.

8. The method of claim 7, wherein in the providing of the information regarding the empty region, memory usage information, which includes at least one kind of information of an identifier used to identify the RFID tag, a user identifier, a data identifier, initial and end addresses of data stored in the user memory, data authority, and operation date and time is generated using the memory usage information regarding the specific data and managed.

9. The method of claim 8, wherein, in the providing of the information regarding the empty region, if the empty region of the user memory is smaller than the size of the specific data, memory reallocation for the data stored in the user memory is performed.

10. The method of claim 8, wherein, in the providing of the information regarding the empty region, if the empty region of the user memory is smaller than the size of the specific data, the data are rearranged in the user memory in a manner such that the data having been stored in the user memory are sequentially rearranged from the initial address of the user memory and stored.

11. The method of claim 8, wherein, in the providing of the information regarding the empty region, if the empty region of the user memory is smaller than the size of the specific data, the user memory is divided into a predetermined unit, the data are divided into a size that corresponds to the divided memories, and the divided data are rearranged in the divided memories.

12. A method of managing a user memory of an RFID tag, the method comprising:
receiving a request for referring to specific data stored in the user memory from a specific application system;
searching memory usage information that comprises information regarding the specific data stored in the user memory and information regarding a region of the user memory storing the data; and
providing memory usage information regarding the specific data in the user memory.

13. The method of claim 12, wherein, in the searching of the memory usage information, the memory usage information comprises at least one kind of information of an identifier used to identify the RFID tag, a user identifier, a data identifier, initial and end addresses of the specific data stored in the user memory, data authority, and operation date and time.

14. The method of claim 13, further comprising,
after the searching of the memory usage information:
receiving notification informing that the referring to the specific data is completed from the outside referring to the specific data;
determining whether the specific data is changed; and
updating the memory usage information regarding the specific data if the specific data is changed.
